# EUROPÄISCHE PATENTSCHRIFT

(11) **EP 0 669 482 B1**
(45) Veröffentlichungstag und Bekanntmachung des Hinweises auf die Patenterteilung: **04.08.1999**
(21) Anmeldenummer: 95890033.4
(22) Anmeldetag: 16.02.1995
(51) Int. Cl.: F16D 69/02

(54) **Reibelement**
Friction element
Elément de friction

(30) Priorität: 25.02.1994 AT 40494
(43) Veröffentlichungstag der Anmeldung: 30.08.1995
(73) Patentinhaber: HOERBIGER Antriebstechnik GmbH, 86956 Schongau (DE)
(72) Erfinder: Kearsey, Andrew, D-86956 Schongau (DE)
(74) Vertreter: Pinter, Rudolf, Dipl.-Ing.

(56) Entgegenhaltungen:
- WO-A-92/22756
- FR-A- 2 677 721
- FR-A- 2 697 306
- GB-A- 2 260 173
- PATENT ABSTRACTS OF JAPAN vol. 006 no. 056 (M-121) ,14.März 1982 & JP-A-56 167929 (HITACHI) 23.Dezember 1981,
- DATABASE WPI Derwent Publications Ltd., London, GB; AN 93-1970199(24) & WO-A-93 11185 (GRAPHITE-BASED CONSTR.MATERIALS RES.INST)

## Beschreibung

Die Erfindung bezieht sich auf ein Reibelement für eine Vorrichtung zur Drehmomentübertragung, mit einem Trägerkörper und einem zur Bildung einer Reibfläche auf dem Trägerkörper befestigten, für eine Flüssigkeits- oder Schmierstoffkühlung geeigneten Reibbelag, wobei der Reibbelag aus wenigstens zwei unterschiedlichen Schichten aufgebaut ist, von denen eine erste Schicht auf dem Trägerkörper befestigt ist und die Unterlage für mindestens eine auf ihr befestigte Reibschicht aus duroplastverbundenen Fasern bildet.

Es ist bekannt, bei Vorrichtungen zur Drehmomentübertragung, bei denen das Drehmoment durch die Reibung zwischen aneinandergepreßten Flächen übertragen wird, wenigstens eine dieser Reibflächen mit einem Reibbelag zu versehen, um die Reibungskraft zwischen den beiden Flächen zu vergrößern. Dabei unterscheidet man zwischen trockenlaufenden und naßlaufenden Reibpaarungen. Die trockenlaufenden Reibpaarungen, wie einleitend charakterisiert und beispielhaft in der GB 2 260 173 A beschrieben, sind mit verhältnismäßig geringem Aufwand herstellbar, unterliegen aber einem verhältnismäßig hohen Verschleiß, so daß sie nur angewendet werden, wenn an die Drehmomentübertragung geringere Anforderungen gestellt werden oder die Reibflächen bei jeder Betätigung nur kurzzeitig aufeinander gleiten. Die naßlaufenden Reibpaarungen werden dagegen durch Flüssigkeit oder Schmierstoff gekühlt, so daß sie weit widerstandsfähiger sind.

Ein solcher naßlaufender Reibbelag ist aus der DE-OS 27 44 994 bekannt, die einen Synchronisierring für eine Getriebesynchronisierung bei Zahnkupplungen beschreibt, dessen Reibbelag von auf organischer Grundlage gebildetem Reibmaterial, also aus einem sogenannten Papierbelag besteht, der auf die Reibfläche aufgeklebt ist. Der Papierbelag ist aus einem Material wie z.B. Zellulosefasern, Asbestfasern, Mineral- und Metallfasern und Füllmaterialien gebildet, das mit Kunstharz getränkt ist.

Weiterhin ist es insbesondere bei Synchronisiereinrichtungen für Kraftfahrzeuggetriebe bekannt, auf die Reibfläche eines Gleichlaufringes aus Metall Reibbeläge aus Keramikwerkstoff, sowie auf Basis verschiedener Metalle oder Metallegierungen gefertigte Reibbeläge aufzubringen, insbesondere Reibbeläge auf Titanatbasis und auf Molybdänbasis, die meist aufgespritzt werden. Reibbeläge dieser Art sind jedoch verhältnismäßig teuer herstellbar und weisen nicht immer befriedigende Reibeigenschaften auf.

In der EP 0 162 393 B1 ist ein Synchronisierring beschrieben, dessen Reibfläche mit einem separat vorgefertigten Reibkörper versehen ist, der aus einem Trägerblech mit einem auf diesem aufgestreuten, anschließend aufgesinterten und dann durch Pressen verdichteten Streusinterreibbelag gebildet ist. Dieser separat gefertigte Reibkörper wird anschließend auf die Reibfläche des Basiskörpers aus Metall aufgebracht und an dieser befestigt, z.B. festgeschweißt. Dieser bekannte Reibbelag weist bei Verwendung einer entsprechenden Pulvermischung für die Herstellung des Sinterbelags große Widerstandsfähigkeit und auch brauchbare Reibeigenschaften auf. Der für die Herstellung erforderliche Aufwand ist jedoch auch hier verhältnismäßig groß, weil zunächst der separat gefertigte Reibkörper hergestellt, anschließend in die richtige Form gebracht und auf der Reibfläche befestigt werden muß.

Ein weiterer Reibring für Kupplungen oder Bremsen ist schließlich aus der DE-OS 36 09 879 bekannt, von dessen Reibflächen wenigstens eine mit einem durch Sintern hergestellten Reibbelag versehen ist. Der Reibbelag ist jedoch auf die Reibfläche des Trägerkörpers selbst unmittelbar aufgesintert, so daß eine separate Fertigung des Reibkörpers und das Aufbringen auf die Reibfläche mittels eines eigenen Trägerbleches wegfällt. Der Streusinter-Reibbelag wird wie bei der Herstellung der bekannten ebenen Reiblamellen zunächst auf einen ringförmigen, ebenen Tragkörper aufgebracht, der anschließend als voller Ring mit einer oder mehreren besinterten Reibflächen durch Tiefziehen zylindrisch oder konisch umgeformt und anschließend kalibriert und endverdichtet wird. Damit ist die Herstellung eines Reibringes mit Streusinterreibbelag wesentlich vereinfacht, die Vorteile eines durch Sintern hergestellten Reibbelages, insbesondere die große Widerstandsfähigkeit gegen hohe Beanspruchungen, bleiben jedoch voll erhalten.

Insgesamt bestehen die bisher bekannten naßlaufenden Reibbeläge aus einem homogenen Reibwerkstoff, der direkt auf das Trägerelement aufgebracht, z.B. aufgeklebt, aufgeschweißt, aufgespritzt oder aufgesintert ist. Daraus ergibt sich zwangsweise, daß die wirkenden Komponenten des Reibwerkstoffes homogen über den gesamten Reibbelag, insbesondere auch über dessen ganze Dicke verteilt sein müssen, um sicherzustellen, daß die für die Reibung wirksamen Komponenten stets auch auf der die Reibungskraft auf die Gegenfläche übertragenden Oberfläche des Reibbelages vorhanden sind. Bei einem hoch wirksamen Reibbelag mit großer Widerstandsfähigkeit sind jedoch die wirkenden Komponenten teuer, z.B. Kohlenstoff/ Kohlenstoffverbindungsmaterial oder Aramidfasern. Da verhältnismäßig viel teures Reibmaterial notwendig ist, um einen solchen Reibbelag herzustellen, ist dieser auch verhältnismäßig teuer. Auf Papier- oder Korkbasis hergestellte Reibbeläge sind dagegen zwar billiger, haben aber auch nur eine niedrigere Leistung. Auch Reibbeläge aus Sintermetall sind billiger.

Der Erfindung liegt die Aufgabe zugrunde, einen Reibbelag der eingangs angeführten Ausführung so zu verbessern, daß er die Vorteile der Kunstfasern, nämlich sehr hohe Hitzebeständigkeit und niedriges statisch-dynamisches Reibwertverhältnis, mit den Vorteilen des Sintermetallbelages, nämlich Zuverlässigkeit, niedrige Kosten und geringeren Verschleiß, vereinigt.

Die Unterlage besteht aus einer zellulosen Basis mit Kunstfasern und Füllmaterial, die porös ausgebildet ist und ein Gewicht von 200 bis 1500 g/m² aufweist, und die mindestens eine Reibschicht besteht aus duroplastverbundenen Kunstfasern und weist eine höhere Porosität als die Unterlage auf.

Wie sich gezeigt hat, werden naßlaufende Reibbeläge, wie z.B. Papierbeläge, im Normalbetrieb praktisch nicht verschlissen. Während des Einlaufens findet lediglich ein Setzen des Belages statt, das nach sehr langem Einsatz langsam fortschreitet. Jedenfalls ist die Herstellung von naßlaufenden Kupplungen möglich, deren Reibbelag die gleiche oder eine längere Lebensdauer als das Getriebe aufweist. Daraus ergibt sich, daß die für die Reibung wirkenden Komponenten des Reibbelages nur in der äußersten Schicht desselben, die an der Gegenfläche anliegt, erforderlich sind. Unter dieser eigentlichen Reibschicht genügt ein verhältnismäßig billiges poröses Trägermaterial, dessen Aufgabe lediglich darin besteht, die eigentliche Reibschicht abzustützen und zu kühlen, nämlich durch Aufsaugen von Flüssigkeit oder Schmiermittel bei unbelastetem Reibbelag und durch Abgabe der Flüssigkeit bzw. des Schmiermittels, sobald der Reibbelag unter Druck an die Gegenfläche angepreßt wird.

Der erfindungsgemäße Reibbelag weist demnach die vorteilhaften Eigenschaften der bisherigen sogenannten Papierbeläge auf, nämlich die sehr hohe Hitzebeständigkeit bei niedrigem statisch-dynamischem Reibwertverhältnis, ohne deren Nachteil zu besitzen, nämlich die hohen Herstellungskosten, weil bei der erfindungsgemäßen Ausführung die für die Reibung wirksamen, verhältnismäßig teuren Komponenten nur in einer dünnen Schicht an der Oberfläche des Reibbelages, also in nur kleiner Menge vorgesehen sind.

Auf einem Prüfstand wurden Versuche unter schweren Bedingungen mit einem Reibbelag durchgeführt, der mit einer vierfaserdicken (0,02 mm) Reibschicht versehen war. Die Fasern waren schwarz und die Unterlage war weiß. Obwohl während des Versuches eine Verdichtung von 0,08 mm pro Belag stattfand, konnte man die Fasern unter dem Mikroskop sehen. Diese waren nach dem Versuch in der gleichen Menge wie vorher vorhanden.

Weitere Vorteile des erfindungsgemäßen Reibbelages sind, daß seine Kosten durchaus mit denen von gewöhnlichen Papierbelägen mit homogenem Belag ohne teuere Einlagen aus Kunstfasern vergleichbar sind. Die verhältnismäßig teuere obere Reibschicht ist beim erfindungsgemäßen Reibbelag sehr leicht und dünn, lediglich die billige untere Unterlage ist relativ schwer und dick. Auch die Fertigungskosten sind nicht viel höher als die Kosten für die Herstellung von gewöhnlichen Papierbelägen. Außerdem kann der erfindungsgemäße Reibbelag auf weichen (ungehärteten) Gegenflächen arbeiten, z.B. auf Flächen aus Stahl, Aluminiumlegierungen und Kunststoff.

Im Rahmen der Erfindung sind weitere Ausgestaltungen des erfindungsgemäßen Reibbelages möglich. So kann die Reibschicht ein Gewicht von 10 bis 120 g/m² und eine Dicke von 0,02 bis 0,3 mm aufweisen. Es hat sich gezeigt, daß diese Dimensionierung zweckmäßig ist, um die erfindungsgemäßen Vorteile zu erreichen, insbesondere eine dünne und daher preislich nur wenig ins Gewicht fallende Reibschicht.

Die Unterlage weist vorzugsweise einen hitzebeständigen Duroplastanteil von 20 bis 60 Gew.-% ihres Gesamtgewichtes auf, z.B. phenolische modifizierte Harze (Resol oder Novolack), Epoxyharz, Melamin, Silikonharz, Akrylharz, vorzugsweise phenolisches Resolharz im Ausmaß von 28 bis 36 Gew.-% des Gesamtgewichtes der Unterlage. Die so ausgebildete Unterlage ist verhältnismäßig einfach herstellbar, relativ billig und weist eine große Porosität auf, so daß sie ausreichend Flüssigkeit oder Schmierstoff zur Kühlung aufnehmen kann.

Die Reibschicht kann nach einem weiteren Merkmal der Erfindung im Ausmaß von mindestens 70 Gew.-% ihres Gesamtgewichtes aus Kunstfasern und Duroplast bestehen und einen Anteil von hitzebeständigem Duroplast aufweisen, der 25 bis 60 Gew.-% des Gesamtgewichtes der Reibschicht beträgt, z.B. phenolische modifizierte Harze (Resol oder Novolack), Epoxyharz, Melamin, Silikonharz, Akrylharz u.dgl., vorzugsweise phenolisches Resolharz im Ausmaß von 45 bis 55 Gew.-% des Gesamtgewichtes der Reibschicht. Das hitzebeständige Duroplast der Reibschicht kann erfindungsgemäß bis zu 50 Gew.-% Füllmaterial enthalten, vorzugsweise ein Füllmaterial aus Kohlenstoffpartikeln. Dadurch wird eine sichere Verbindung zwischen den Bestandteilen der Reibschicht erreicht.

Eine vorteilhafte Reibschicht ergibt sich erfindungsgemäß auch dadurch, daß die vorzugsweise ungewebten Kunstfasern der Reibschicht 10 bis 75 Gew.-% des Gesamtgewichtes der Reibschicht ausmachen und eine Faserlänge von 3 bis 25 mm, vorzugsweise 6 bis 15 mm aufweisen, bei einem Faserdurchmesser von 3 bis 50 µm, wobei vorzugsweise Kohlenstoffasern im Ausmaß von 50 bis 60 Gew.-% des Gesamtgewichtes der Reibschicht mit einer Länge von 6 bis 15 mm und einem Faserdurchmesser von 7 um vorgesehen sind. Die Fasern sind dabei über die ganze Dicke der Reibschicht in unregelmäßiger Anordnung verteilt und ausgerichtet, wodurch sich besonders gute Reibeigenschaften ergeben.

Das Füllmaterial in der Unterlage hat in weiterer Ausgestaltung der Erfindung eine saugfähige Struktur, besteht vorzugsweise aus kristallinem Silikat und ist in einem Anteil zwischen 2 und 20 Gew.-% des Gesamtgewichtes der Unterlage, vorzugsweise wenigstens 10 Gew.-% vorgesehen, wobei im Füllmaterial mehr als das 2,5-fache seines Eigengewichtes Öl absorbierbar ist. Die dadurch erzielte große Saugfähigkeit stellt eine wirksame Kühlung des Reibbelages auch bei größerer Belastung sicher.

Insgesamt hat die Unterlage erfindungsgemäß eine Porosität zwischen 50 und 10 %, vorzugsweise zwischen 20 und 10 % für Synchronisierungsringe und zwischen 50 und 40 % für Reiblamellen.

Als vorteilhaft hat es sich ferner erwiesen, wenn erfindungsgemäß die Porosität der Reibschicht größer als die Porosität der Unterlage ist, wobei sie vorzugsweise zwischen 50 und 95 % liegt. Da die größte Wärmebelastung bekanntlich im Bereich der Reibschicht auftritt, ist es auch vorteilhaft, in diesem Bereich eine ausreichende Kühlung zu haben.

Gemäß der Erfindung ist es zweckmäßig, die Belagdicke der Unterlage zwischen 0,3 und 2,5 mm bei gleichbleibender Dicke der Reibschicht zwischen 0,02 und 0,3 mm auszuführen. Diese Bemessung hat sich in der Praxis verhältnismäßig gut bewährt.

Der erfindungsgemäße Reibbelag kann mittels an sich bekannter Papiermaschinen hergestellt werden, wobei es möglich ist, die einzelnen Schichten, also die Reibschicht und die aus einer oder mehreren Schichten bestehende Unterlage, entweder getrennt herzustellen und anschließend miteinander zu verbinden, oder aber die einzelnen Schichten gemeinsam zu verdicken und während ihrer Herstellung miteinander zu verbinden, wenn die Papiermaschine für diese Herstellungsart eingerichtet ist.

Zur Verbindung der einzelnen Belagsschichten sieht die Erfindung vor, daß die Reibschicht und die Unterlage durch die Vernetzung des in beiden Schichten befindlichen Duroplastes und/oder durch eine physikalische Schichtenmischung im Grenzbereich und/oder durch eine Verklebung der Schichten fest miteinander verbunden werden können. Welche dieser Möglichkeiten in der Praxis jeweils anzuwenden ist, wird von den vorhandenen Gegebenheiten abhängen, insbesondere von den verfügbaren Herstellungsmaschinen und von der genauen Zusammensetzung der einzelnen Reibschichten. In jedem Fall wird aber eine sichere Verbindung zwischen den einzelnen Schichten erreicht.

Ein bevorzugtes Ausführungsbeispiel sieht vor, daß die Reibschicht auf die Unterlage mit einer Kleberschicht von 0,01 bis 0,05 mm Dicke aus hochhitzebeständigem Kleber, z.B. Nitril modifizierte Phenolharze, Epoxyharz, Akrylharz u.dgl., vorzugsweise ein Nitril modifizierter Phenolharz aufgeklebt und ausgehärtet ist. Ein solcher Phenolharz ist unter der Markenbezeichnung AL 6700 von der Firma BF Goodrich im Handel erhältlich. Wie sich gezeigt hat, wird auf diese Weise eine feste und haltbare Verbindung erreicht.

Die Verbindung des erfindungsgemäßen Reibbelages mit dem Trägerkörper, der z.B. aus Metall oder Kunststoff bestehen kann, erfolgt zweckmäßig in gleicher Weise wie die Verbindung zwischen den einzelnen Schichten des Reibbelages, wobei auch das gleiche Klebemittel verwendet werden kann.

Weitere Einzelheiten und Vorteile der Erfindung geben sich aus der nachfolgenden Beschreibung von Ausführungsbeispielen, die in den Zeichnungen dargestellt sind. In diesen zeigen: Fig. 1 einen mit einem erfindungsgemäßen Reibbelag versehenen Synchronisierungsring in perspektivischer Darstellung, Fig. 2 eine ebene Kupplungslamelle mit einem erfindungsgemäßen Reibbelag auf ihren beiden Seiten gleichfalls in perspektivischer Darstellung und die Fig. 3 bis 6 verschiedene Ausführungsformen des auf einem Trägerkörper befestigten erfindungsgemäßen Reibbelages im Querschnitt als stark vergrößert dargestellte Ausschnitte.

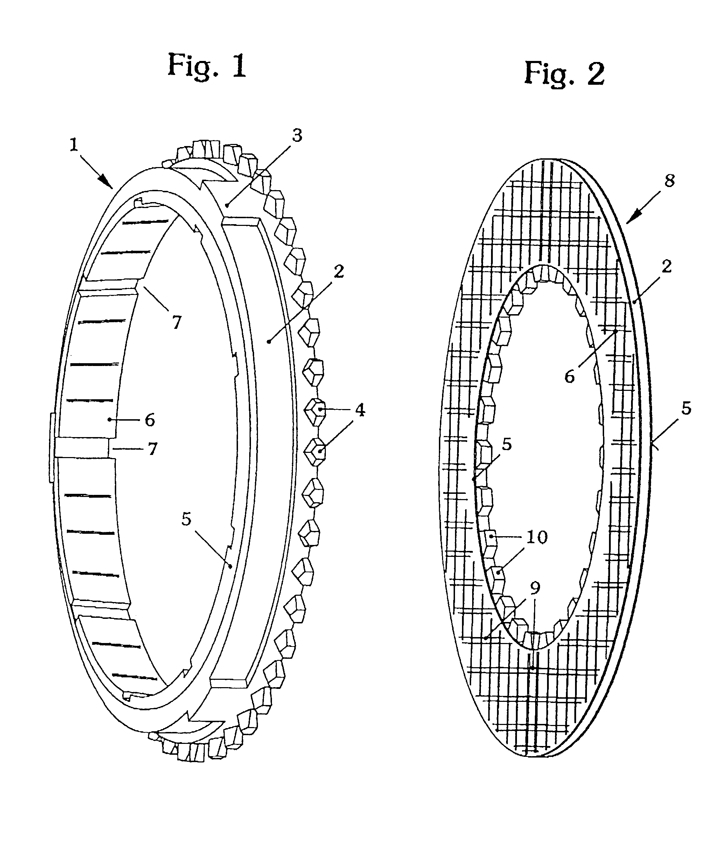

Der in Fig. 1 gezeigte Synchronring ist mit 1 bezeichnet und besteht aus einem Trägerkörper 2 aus einem mechanisch festen Material, vorzugsweise aus einem Metall, aus einer Metallegierung oder einem Sinterkörper, er kann aber auch aus Kunststoff hergestellt sein. Der Trägerkörper 2 ist dem jeweiligen Anwendungszweck entsprechend profiliert. Im Ausführungsbeispiel weist er an seinem äußeren Umfang Mitnahmenocken 3 und eine Außenverzahnung 4 auf.

An seinem inneren Umfang ist der Trägerkörper 2 als konische Fläche ausgebildet, auf der ein Reibbelag 5 befestigt ist, der am Innenumfang eine gleichfalls konische Reibfläche 6 bildet, die mit quer über die Reibfläche 6 verlaufenden Nuten 7 für den Abfluß der Kühlflüssigkeit oder des Schmierstoffes versehen ist. Über die Reibfläche 6 wird das Drehmoment auf eine Gegenfläche eines nicht dargestellten weiteren Synchronisierungselementes übertragen.

Beim Ausführungsbeispiel nach Fig. 2 handelt es sich um eine ebene Kupplungslamelle 8, die aus einem ebenen Trägerkörper 2 besteht, der auf seinen beiden Seiten mit je einem Reibbelag 5 versehen ist. Jeder Reibbelag bildet an seiner Außenseite eine ebene Reibfläche 6, die für den Abfluß des Kühlmittels mit einer kreuzweise angeordneten Rillierung 9 versehen ist. Am Innenrand der Kupplungslamelle 8 befindet sich eine Innenverzahnung 10 für die Weiterleitung des durch die Kupplung übertragenen Drehmomentes. Der Trägerkörper 2, der als ringförmige Scheibe ausgebildet ist, besteht auch bei diesem Ausführungsbeispiel aus Metall oder Kunststoff. Die Reibflächen 6 arbeiten mit ebenen Gegenflächen zusammen, die in der Regel von ebenen ringförmigen Metallscheiben mit einer Außenverzahnung zur Weiterleitung des Drehmomentes gebildet sind.

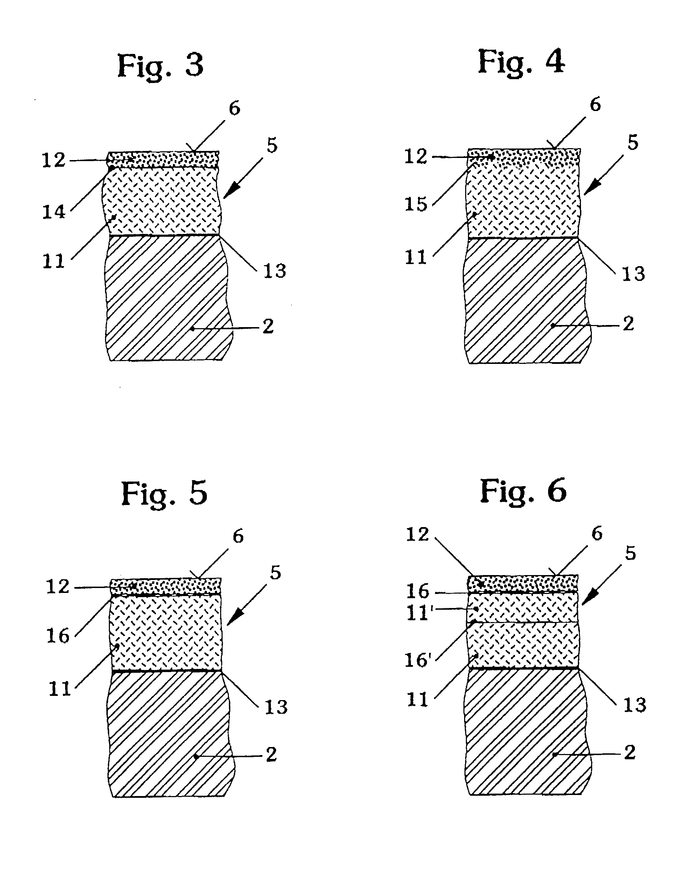

Der Aufbau des erfindungsgemäßen Reibbelages ist aus den in den Fig. 3 bis 6 dargestellten Ausführungsbeispielen zu erkennen. Der Reibbelag 5 besteht in allen Ausführungsbeispielen aus mindestens zwei Schichten und ist auf einem Trägerkörper 2 befestigt, z.B. aufgeklebt. Die Fig. 3 bis 5 zeigen Ausführungsbeispiele, in denen der Reibbelag 5 aus zwei Schichten besteht, u.zw. aus einer auf dem Trägerkörper 2 befestigten porösen Unterlage 11 und aus einer ebenfalls porösen Reibschicht 12, die auf der Unterlage 11 befestigt ist. Die Reibschicht 12 bildet an ihrer Außenseite die ebene, zylindrische oder konische Reibfläche 6, die mit einer Gegenfläche zusammenarbeitet.

Das Ausführungsbeispiel nach Fig. 6 unterscheidet sich von den Ausführungen nach den Fig. 3 bis 5 dadurch, daß der Reibbelag 5 aus drei Schichten besteht, u.zw. aus einer ersten Unterlage 11, einer darauf befestigten zweiten Unterlage 11' und schließlich aus der Reibschicht 12 mit der Reibfläche 6, die von der Unterlage 11' getragen wird.

In allen Ausführungsbeispielen ist die auf dem Trägerkörper 2 befestigte Unterlage 11 als Verbundmaterial aus einer zellulosen Basis mit Kunstfasern und Füllmaterial zusammengesetzt. Es handelt sich beispielsweise um einen faserverstärkten gefüllten Kunststoff. Grundlage sind Zellulosefasern mit zusätzlichen Kunstfasern, die die Hitzebeständigkeit und die Stabilität erhöhen. Füllstoffe wie kristalline Silikate sind ein weiterer wichtiger Anteil, der eine hohe Saugfähigkeit, etwa bis zu 250 % seines Eigengewichtes, besitzt.

Gewöhnlich wird die Unterlage aus Pappe mit einem Gewicht von 300 bis 1000 g/m² hergestellt, wobei das Gewicht von der endgültigen Belagsdicke abhängig ist. Der Harzanteil beträgt 20 bis 50 Gew.-% des Gesamtgewichtes der Unterlage und wird zweckmäßig während der Papierfertigung oder während eines zweiten Arbeitsganges mit den übrigen Bestandteilen vermischt bzw. infiltriert. Die Porosität der Unterlage liegt gewöhnlich zwischen etwa 10 und 50 %. Die Belagdicke der Unterlage 11 liegt zwischen 0,3 und 2,5 mm.

Die Reibschicht 12 ist gleichfalls porös und besteht aus duroplastverbundenen Kunstfasern, vorzugsweise aus Kohlenstoff. Sie weist ein Gewicht von ca. 10 bis 60 g/m² und eine Dicke von 0,02 bis 0,3 mm auf. Die Porosität der Reibschicht 12 ist größer als die Porosität der Unterlage 11 und liegt vorzugsweise zwischen 50 und 95 %.

Von besonderer Wichtigkeit ist, wie die Reibschicht 12 auf der Unterlage 11 befestigt wird. Dies kann auf verschiedene Weise erfolgen. Die Reibschicht 12 kann als Vlies auf die Unterlage 11 geklebt werden. Die Klebermenge muß dabei so optimiert werden, daß die Porosität zwischen und innerhalb der Unterlage 11 und der Reibschicht 12 nicht zerstört wird. Die Reibschicht 12 kann aber auch während des Papiertrocknens, z.B. als Vlies in der Filmpresse, mit Kleber oder Harz als Binder zusammengepreßt und getrocknet werden. Schließlich kann die Reibschicht während des Papierformens der Unterlage auf das dabei verwendete Sieb der Papiermaschine aufgebracht und mit der Unterlage verbunden werden. Das die Reibschicht bildende Vlies kann unter das die Unterlage bildende Papier direkt auf das Sieb gelegt werden, wobei dann die Reibschicht als Träger der Unterlage dient.

In den Fig. 3 bis 6 sind verschiedene Ausführungsbeispiele für die Verbindung zwischen den einzelnen Schichten des Reibbelages dargestellt. In allen Ausführungsbeispielen ist der Reibbelag 5 mit Hilfe einer Kleberschicht 13 auf dem Trägerkörper 2 befestigt. Die Befestigung der Reibschicht 12 auf der Unterlage 11 erfolgt gemäß Fig. 3 durch die Vernetzung 14 des in beiden Schichten befindlichen Duroplastes, wodurch eine feste Verbindung entsteht, die die Porosität zwischen den beiden Schichten 11,12 nicht stört.

Im Ausführungsbeispiel nach Fig. 4 ist dagegen eine physikalische Verbindung 15 vorgesehen. Die beiden Schichten 11 und 12 sind dort im Grenzbereich miteinander vermischt, was gleichfalls zu einer festen und dennoch porösen Verbindung führt. Fig. 5 zeigt schließlich eine Verbindung, bei der die Reibschicht 12 mit der Unterlage 11 durch eine Verklebung 16 verbunden ist. Im Ausführungsbeispiel nach Fig. 6 sind zwei Verklebungen vorgesehen, u.zw. eine Verklebung 16 zwischen der Reibschicht 12 und der darunterliegenden Schicht der Unterlage 11' und eine Verklebung 16' zwischen den beiden Unterlagen 11 und 11'. Auch diese beiden Verklebungen sind so beschaffen, daß sie die Porosität zwischen den einzelnen Schichten des Reibbelages 5 nicht beeinträchtigen.

Nachfolgend werden noch zwei Beispiele für die Zusammensetzung des erfindungsgemäßen Reibbelages angeführt, die sich bei Versuchen bewährt haben:

### Beispiel 1:

Der Reibbelag 5 ist aus zwei unterschiedlichen Schichten aufgebaut, u.zw. aus einer Unterlage 11 und einer Reibschicht 12. Die Reibschicht besteht aus 20 g/m² eines Kohlenfaservlieses, das eine Faserlänge von 3 bis 12 mm hat. Jede Faser weist ca. 12000 Filamente mit einem Durchmesser von je 7 µm auf. Das Kohlenfaservlies wurde mit 48 Gew.-% des Gesamtgewichtes der Reibschicht phenolischem Resolharz getränkt und mit 30 g/m² eines Klebers AL 6700 der Firma BF Goodrich, bei dem es sich um ein Nitril modifiziertes Phenolharz handelt, auf eine Unterlage mit einem Gewicht von 400 g/m² geklebt. Die Unterlage besteht aus 40 Gew.-% des Gesamtgewichtes der Unterlage aus Baumwollefusseln oder Baumwollfasern, 15 Gew.-% kristallinem Silikat, 15 Gew.-% Mineralfaser und 30 Gew.-% phenolischem Resolharz. Das Kohlenfaservlies wurde als ein selbständiges Vlies mit Polyvinylalkohol als Binder hergestellt und konsequent mit phenolischem Harz imprägniert.

Die beiden Teile, Kohlenfaser-Reibbelag 5 und Unterlage 11, wurden während der Fertigung der Lamellen oder Schichten miteinander verklebt und verdichtet und mit dem gleichen Typ von Kleber, der zwischen den Schichten verwendet wurde, auf den Trägerkörper 2 aufgeklebt. Dieser Reibbelag, der eine Porosität von 45 % hat, wurde geprüft und zeigt die Ergebnisse und Vorteile für Lamellenanwendungen, wie sie unten beschrieben sind.

### Beispiel 2:

Der erfindungsgemäße Reibbelag 5 wurde gleichzeitig auf einer Papiermaschine hergestellt. Die Reibschicht 12 besteht aus 35 g/m² Kohlenfaservlies mit einer Faserlänge von 6 bis 15 mm. Jede Faser hat ca. 9000 Filamente und jedes Filament hat einen Durchmesser von 30 µm. Das Kohlenfaservlies wurde auf einem Steigsieb-Former mit 48 Gew.-% des Gesamtgewichtes der Reibschicht phenolischem Resolharz und 10 Gew.-% nitrilmodifiziertem Kautschuk hergestellt und dann sofort vor dem Egoutteur auf die Unterlage aufgebracht. Die Unterlage hat ein Gewicht von 500 g/m² und besteht aus 40 Gew.-% Baumwollefusseln oder Baumwollfasern, 20 Gew.-% kristallinem Silikat, 15 Gew.-% Mineralfasern und 25 Gew.-% phenolischem Resolharz.

Der so erzeugte Reibbelag kann als normaler Papierbelag verarbeitet werden, z.B. in Teilkreise gestanzt, die für Synchronisierungsringe von Getrieben benützt, oder in Lamellen gestanzt, die auf Stahlträger aufgeklebt werden können. Wenn dieser Reibbelag auf einen Synchronisierring mit einer Porosität von 25 % geklebt und verwendet wird, zeigt er insbesondere gute Ergebnisse.

Unter den Bedingungen, wie sie bei der Synchronisierung von Schaltgetrieben von Kraftfahrzeugen herrschen, zeigte der erfindungsgemäße Reibbelag folgende Eigenschaften:
- Der dynamische Reibwert betrug µ = 0,12 und der statische Reibwert µ = 0,125 um. Durch dieses geringe Reibwertverhältnis ergibt sich ein sanftes Betätigungsgefühl beim Schalten des Getriebes. Bei Synchronisierungseinrichtungen mit bisher bekannten Papierbelägen ist der statische Reibwert viel höher, was ein wesentlich schlechteres Betätigungsgefühl ergibt, und bei Sinterbelägen ist der dynamische Reibwert geringer, wodurch auch weniger Leistung zu erwarten ist.
- Bei einer Dichteänderung von 30 % tritt auch eine Reibwertänderung von nur 5 % auf. Dies ist viel geringer als bei anderen Reibbelägen, bei denen eine Dichteänderung von z.B. 10 % eine Reibwertänderung von etwa 10 % zur Folge hat.
- Die beim erfindungsgemäßen Reibbelag verwendeten Kohlenstoffasern sind ölunempfindlich. Bei Verwendung verschiedener Ölsorten ergab sich lediglich eine Reibwertänderung von rund 10 %. Im Vergleich dazu tritt bei Sintermetall eine Reibwertänderung von rund 30 % auf.
- Die Kohlenstoffasern des erfindungsgemäßen Reibbelages haben eine sehr offene, poröse Struktur, die einen Einsatz des Reibbelages ohne Rillierung ermöglichen.

Bei Kupplungsversuchen mit dem erfindungsgemäßen Reibbelag haben sich folgende Vorteile ergeben:
- Sowohl der dynamische als auch der statische Reibwert betrug beim erfindungsgemäßen Papierbelag µ = 0,08, wogegen die beiden Reibwerte bei einem vergleichbaren Sinterbelag bei etwa µ = 0,05 dynamisch und µ = 0,08 statisch liegen.
- Es ergab sich eine höhere Leistungsfähigkeit als bei normalen Papierbelägen, insbesondere brennen oder verkohlen die erfindungsgemäßen Reibbeläge nicht.
- Dafür wird eine höhere Energiekapazität als bei Sintermetall und reinen Kunstfaserbelägen erreicht. Außerdem haben die erfindungsgemäßen Beläge eine sehr hohe Hitzebeständigkeit und Wärmekapazität.
- Der erfindungsgemäße Reibbelag erzeugt auf der mit ihr zusammenwirkenden Gegenfläche lediglich unter sehr hohen Energie- und Leistungsbedingungen sogenannte "Hotspots", also überhitzte Stellen, wobei die zulässigen Bedingungen viel höher liegen als bei Papier- und reinen Kohlenstoffbelägen.

## Patentansprüche

1. Reibelement (10) für eine Vorrichtung zur Drehmomentübertragung, mit einem Trägerkörper (12) und einem zur Bildung einer Reibfläche auf dem Trägerkörper befestigten, für eine Flüssigkeits- oder Schmierstoffkühlung geeigneten Reibbelag, wobei der Reibbelag aus wenigstens zwei unterschiedlichen Schichten (11, 16) aufgebaut ist, von denen eine erste Schicht (16) auf dem Trägerkörper befestigt ist und die Unterlage für mindestens eine auf ihr befestigte Reibschicht (12) aus duroplastverbundenen Fasern bildet, **dadurch gekennzeichnet**, daß die Unterlage aus einer zellulosen Basis mit Kunstfasern und Füllmaterial besteht, die porös ausbildet ist und ein Gewicht von 200 bis 1500 g/m²aufweist, und daß die mindestens eine Reibschicht aus duroplastverbundenen Kunstfasern besteht und eine höhere Porosität als die Unterlage aufweist.

2. Reibelement nach Anspruch 1, dadurch gekennzeichnet, daß die Reibschicht (12) ein Gewicht von 10 bis 120 g/m² und eine Dicke von 0,02 bis 0,3 mm aufweist.

3. Reibelement nach Anspruch 1 oder 2, dadurch gekennzeichnet, daß die Unterlage (11) einen hitzebeständigen Duroplastanteil von 20 bis 60 Gew.-% ihres Gesamtgewichtes aufweist, z.B. phenolische modifizierte Harze (Resol oder Novolack), Epoxyharz, Melamin, Silikonharz, Akrylharz, vorzugsweise phenolisches Resolharz im Ausmaß von 28 bis 36 Gew.-% des Gesamtgewichtes der Unterlage (11).

4. Reibelement nach Anspruch 1, 2 oder 3, dadurch gekennzeichnet, daß die Reibschicht (12) im Ausmaß von mindestens 70 Gew.-% ihres Gesamtgewichtes aus Kunstfasern und Duroplast besteht und einen Anteil von hitzebeständigem Duroplast aufweist, der 25 bis 60 Gew.-% des Gesamtgewichtes der Reibschicht (12) beträgt, z.B. phenolische modifizierte Harze (Resol oder Novolack), Epoxyharz, Melamin, Silikonharz, Akrylharz u.dgl., vorzugsweise phenolisches Resolharz im Ausmaß von 45 bis 55 Gew.-% des Gesamtgewichtes der Reibschicht (12).

5. Reibelement nach Anspruch 4, dadurch gekennzeichnet, daß das hitzebeständige Duroplast der Reibschicht (12) bis zu 50 Gew.-% Füllmaterial enthält, vorzugsweise ein Füllmaterial aus Kohlenstoffpartikeln.

6. Reibelement nach einem der Ansprüche 1 bis 5, dadurch gekennzeichnet, daß die vorzugsweise ungewebten Kunstfasern der Reibschicht (12) 10 bis 75 Gew.-% des Gesamtgewichtes der Reibschicht (12) ausmachen und eine Faserlänge von 3 bis 25 mm, vorzugsweise 6 bis 15 mm aufweisen, bei einem Faserdurchmesser von 3 bis 50 µm, wobei vorzugsweise Kohlenstoffaser im Ausmaß von 50 bis 60 Gew.-% des Gesamtgewichtes der Reibschicht (12) mit einer Länge von 6 bis 15 mm und einem Faserdurchmesser von 7 um vorgesehen sind.

7. Reibelement nach einem der Ansprüche 1 bis 6, dadurch gekennzeichnet, daß das Füllmaterial in der Unterlage (11) eine saugfähige Struktur hat, vorzugsweise aus kristallinem Silikat besteht und in einem Anteil zwischen 2 und 20 Gew.-% des Gesamtgewichtes der Unterlage (11), vorzugsweise wenigstens 10 Gew.-%, vorgesehen ist, wobei im Füllmaterial mehr als das 2,5-fache seines Eigengewichtes Öl absorbierbar ist.

8. Reibelement nach einem der Ansprüche 1 bis 7, dadurch gekennzeichnet, daß die Unterlage (11) eine Porosität zwischen 50 und 10 % hat, vorzugsweise zwischen 20 und 10 % für Synchronisierungsringe (1) und zwischen 50 und 40 % für Reiblamellen (8).

9. Reibelement nach einem der Ansprüche 1 bis 8, dadurch gekennzeichnet, daß die Porosität der Reibschicht größer als die Porosität der Unterlage (11) ist und vorzugsweise zwischen 50 und 95 % liegt.

10. Reibelement nach einem der Ansprüche 1 bis 9, dadurch gekennzeichnet, daß die Belagdicke der Unterlage (11) zwischen 0,3 und 2,5 mm bei gleichbleibender Dicke der Reibschicht (12) zwischen 0,02 und 0,3 mm beträgt.

11. Reibelement nach einem der Ansprüche 1 bis 10, dadurch gekennzeichnet, daß die Reibschicht (12) und die Unterlage (11) durch die Vernetzung des in beiden Schichten befindlichen Duroplastes und/oder durch eine physikalische Schichtenmischung im Grenzbereich und/oder durch eine Verklebung der Schichten fest miteinander verbunden sind.

12. Reibelement nach einem der Ansprüche 1 bis 11, dadurch gekennzeichnet, daß die Reibschicht (12) auf die Unterlage (11) mit einer Kleberschicht (16) von 0,01 bis 0,05 mm Dicke aus hoch hitzebeständigem Kleber, z.B. Nitril modifizierte Phenolharze, Epoxyharz, Akrylharz u.dgl., vorzugsweise ein Nitril modifizierter Phenolharz aufgeklebt und ausgehärtet ist.

## Claims

1. A friction element (10) for a device for torque transmission, having a substrate (12) and a friction lining which is secured on the substrate to form a friction surface and which is suitable for liquid cooling or lubricant cooling, the friction lining being composed of at least two different layers (11, 16), of which a first layer (16) is secured on the substrate and forms the support for at least one friction layer (11) of duroplastic-connected fibres which is secured thereon, characterised in that the support is composed of a cellulose base with synthetic fibres and filler, which base is porous and has a weight of 200 to 1500 g/m², and in that the at least one friction layer is composed of duroplastic-connected synthetic fibres and has a higher porosity than the support.

2. A friction element in accordance with Claim 1, characterised in that the friction layer (12) has a weight of 10 to 120 g/m² and a thickness of 0.02 to 0.3 mm.

3. A friction element in accordance with Claim 1 or 2, characterised in that the support (11) has a heat-resistant duroplastic proportion of 20 to 60 percent by weight of its total weight, e.g. phenolic modified resins (resol or novolak), epoxy resin, melamine, silicone resin, acrylic resin, preferably phenolic resol resin in the amount of 28 to 36 percent by weight of the total weight of the support (11).

4. A friction element in accordance with Claim 1, 2 or 3, characterised in that the friction layer (12) is composed of synthetic fibres and duroplastic in the amount of at least 70 percent by weight of its total weight and has a proportion of heat-resistant duroplastic amounting to 25 to 60 percent by weight of the total weight of the friction layer (12), e.g. phenolic modified resins (resol or novolak), epoxy resin, melamine, silicone resin, acrylic resin and the like, preferably phenolic resol resin in the amount of 45 to 55 percent by weight of the total weight of the friction layer (12).

5. A friction element in accordance with Claim 4, characterised in that the heat-resistant duroplastic of the friction layer (12) comprises up to 50 percent by weight of filler, preferably a filler of carbon particles.

6. A friction element in accordance with any one of Claims 1 to 5, characterised in that the preferably non-woven synthetic fibres of the friction layer (12) form 10 to 75 percent by weight of the total weight of the friction layer (12) and have a fibre length of 3 to 25 mm, preferably 6 to 15 mm, together with a fibre diameter of 3 to 50 µm, carbon fibres which are in the amount of 50 to 60 percent by weight of the total weight of the friction layer (12) and which have a length of 6 to 15 mm and a fibre diameter of 7 µm preferably being provided.

7. A friction element in accordance with any one of Claims 1 to 6, characterised in that the filler in the support (11) has an absorbent structure, is preferably composed of crystalline silicate, and is provided in a proportion between 2 and 20 percent by weight of the total weight of the support (11), preferably at least 10 percent by weight, the filler being able to absorb more than 2.5 times its own weight of oil.

8. A friction element in accordance with any one of Claims 1 to 7, characterised in that the porosity of the support (11) is between 50 and 10%, preferably between 20 and 10% for synchronising rings (1) and between 50 and 40 % for friction discs (8).

9. A friction element in accordance with any one of Claims 1 to 8, characterised in that the porosity of the friction layer is greater than that of the support (11), and is preferably between 50 and 95%.

10. A friction element in accordance with any one of Claims 1 to 9, characterised in that the lining thickness of the support (11) is between 0.3 and 2.5 mm, accompanied by a constant thickness of the friction layer (12) of between 0.02 and 0.3 mm.

11. A friction element in accordance with any one of Claims 1 to 10, characterised in that the friction layer (12) and the support (11) are securely connected to one another by interlacing of the duroplastic located in both layers and/or through physical layer mixing in the border region and/or through gluing together of the layers.

12. A friction element in accordance with any one of Claims 1 to 11, characterised in that the friction layer (12) is stuck onto the support (11) - by means of a layer (16) of adhesive of 0.01 to 0.05 mm thick of highly heat-resistant adhesive, e.g. nitrile modified phenolic resins, epoxy resin, acrylic resin and the like, preferably a nitrile modified phenolic resin - and is hardened.

## Revendications

1. Elément de friction (10) pour un dispositif pour transmettre un couple de rotation, comportant un corps de support (12) et une garniture de friction, appropriée à un refroidissement par un liquide ou un lubrifiant, fixée sur le corps de support, pour la formation d'une surface de friction, où la garniture de friction est constituée par au moins deux couches (11, 16) différentes, parmi lesquelles une première couche (16) est fixée sur le corps de support et constitue la base pour au moins une couche de friction (11) fixée sur elle en fibres liées par une matière thermodurcissable, caractérisé en ce que la base consiste en une base cellulosique avec des fibres synthétiques et une charge, qui est poreuse et présente une masse de 200 à 1 500 g/m², et en ce que la ou les couches de friction consistent en fibres synthétiques liées par une matière thermodurcissable et présentent une porosité plus élevée que la base.

2. Elément de friction selon la revendication 1, caractérisé en ce que la couche de friction (12) a une masse de 10 à 120 g/m² et une épaisseur de 0,02 à 0,3 mm.

3. Elément de friction selon la revendication 1 ou 2, caractérisé en ce que la base (11) présente une proportion de matière thermodurcissable résistante à la chaleur de 20 à 60 % en masse de sa masse totale, par exemple des résines phénoliques modifiées (résol ou novolaque), une résine époxy, la mélamine, une résine de silicone, une résine acrylique, de préférence une résine résol phénolique à raison de 28 à 36 % en masse de la masse totale de la base (11).

4. Elément de friction selon la revendication 1, 2 ou 3, caractérisé en ce que la couche de friction (12) consiste à raison d'au moins 70 % en masse de sa masse totale en fibres synthétiques et en matière thermodurcissable et présente une proportion de matière thermodurcissable résistante à la chaleur qui est de 25 à 60 % en masse de la masse totale de la couche de friction (12), par exemple des résines phénoliques modifiées (résol ou novolaque), une résine époxy, la mélamine, une résine de silicone, une résine acrylique et analogue, de préférence une résine résol phénolique à raison de 45 à 55 % en masse de la masse totale de la couche de friction (12).

5. Elément de friction selon la revendication 4, caractérisé en ce que la matière thermodurcissable résistante à la chaleur de la couche de friction (12) contient jusqu'à 50 % en masse de charge, de préférence une charge constituée par des particules de carbone.

6. Elément de friction selon l'une des revendications 1 à 5, caractérisé en ce que les fibres synthétiques de préférence non tissées de la couche de friction (12) constituent 10 à 75 % en masse de la masse totale de la couche de friction (12) et présentent une longueur de fibre de 3 à 25 mm, de préférence de 6 à 15 mm, pour un diamètre de fibre de 3 à 50 µm, où il est prévu de préférence des fibres de carbone à raison de 50 à 60 % en masse de la masse totale de la couche de friction (12) d'une longueur de 6 à 15 mm et d'un diamètre de fibre de 7 µm.

7. Elément de friction selon l'une des revendications 1 à 6, caractérisé en ce que la charge dans la base (11) a une structure absorbante, consiste de préférence en silicate cristallin et est prévue en une proportion située entre 2 et 20 % en masse de la masse totale de la base (11), de préférence d'au moins 10 % en masse, où plus de 2,5 fois sa propre masse d'huile est absorbable dans la charge.

8. Elément de friction selon l'une des revendications 1 à 7, caractérisé en ce que la base (11) a une porosité située entre 50 et 10 %, de préférence entre 20 et 10 % pour des anneaux de synchronisation (1) et entre 50 et 40 % pour des lamelles de friction (8).

9. Elément de friction selon l'une des revendications 1 à 8, caractérisé en ce que la porosité de la couche de friction est supérieure à la porosité de la base (11) et est située de préférence entre 50 et 95 %.

10. Elément de friction selon l'une des revendications 1 à 9, caractérisé en ce que l'épaisseur de couche de la base (11) est située entre 0,3 et 2,5 mm pour une épaisseur constante de la couche de friction (12) située entre 0,02 et 0,3 mm.

11. Elément de friction selon l'une des revendications 1 à 10, caractérisé en ce que la couche de friction (12) et la base (11) sont liées solidement l'une à l'autre par la réticulation de la matière thermodurcissable située dans les deux couches et/ou par un mélange physique des couches dans le domaine limite et/ou par un collage des couches.

12. Elément de friction selon l'une des revendications 1 à 11, caractérisé en ce que la couche de friction (12) est collée sur la base (11) avec une couche d'adhésif (16) de 0,01 à 0,05 mm d'épaisseur constituée par un adhésif à haute résistance à la chaleur, par exemple des résines phénoliques modifiées par un nitrile, une résine époxy, une résine acrylique ou analogue, de préférence une résine phénolique modifiée par un nitrile, et durcie.
